# EUROPEAN PATENT APPLICATION

(11) **EP 4 693 221 A1**
(43) Date of publication of application: **11.02.2026**
(21) Application number: 24193040.3
(22) Date of filing: 06.08.2024
(51) Int. Cl.: G06V 10/82, G06V 20/52

(54) **SYSTEMS AND METHODS FOR ARTIFICIAL INTELLIGENCE BASED SURVEILLANCE OF A SITE**

(71) Applicant: Siemens Aktiengesellschaft, 80333 München (DE)
(72) Inventor: DEB, Pallav Kumar, 781028 Guwahati, Assam (IN); LITTLE, Michael, Hillsborough, NJ 08844 (US)
(74) Representative: Isarpatent

(57) **Abstract**

Disclosed is a computer-implemented method for monitoring of a site. The method includes generating an insight knowledge base based on at least one recurring visual input received from one or more visual capturing devices installed at the site. Further, the method includes detecting a contextual drift at the site based on comparing a real-time feed received from the one or more visual capturing devices and the insight knowledge base using a drift detection neural network model. Further, the method includes selecting the visual frames corresponding to a plurality of timestamps from the real-time feed in response to detecting the contextual drift. The one or more visual frames selected for the timestamps corresponding to, before the contextual drift, during the contextual drift, and post the contextual drift. Further, the method includes transmitting the visual frames for remote monitoring and anomaly detection at the site.

## Description

The present invention relates to the field of surveillance systems and more particularly relates to systems and methods for surveillance of a site using artificial intelligence-based edge devices.

Real-time remote video surveillance is an essential tool for monitoring large industrial sites, such as manufacturing plants, dockyards, farmlands, and any other industrial facilities involving heavy machinery operations. The monitoring may ensure the safety, security, and operational efficiency of the industrial site. However, implementing effective remote video surveillance may involve substantial investment in video cameras, transmission facilities, digital storage, and staffing. The overall cost and operational complexity are primarily influenced by the quality of the camera visual output, frame rates, the number of cameras required, and storage (memory) of the camera visual output. Striking a balance between these factors is crucial to avoid issues like incomplete coverage, poor image quality, inattentional blindness, and limited recovery and documentation of serious events.

In some conventional techniques, deploying comprehensive remote video surveillance in a large industrial site demands a significant financial commitment. For instance, high-resolution cameras with advanced features are expensive, and their costs multiply with the required number needed to cover extensive areas. Additionally, the infrastructure to transmit and store the visual output from multiple cameras to a central monitoring station is costly, involving robust network setups and bandwidth considerations. Digital storage is another critical component, especially when retaining high-quality visual output or video footage for historical review. Thus, the volume of data generated by multiple high-resolution cameras may be enormous, necessitating extensive storage solutions.

In some conventional techniques, another challenging aspect of remote video surveillance is the staffing requirement. Monitoring multiple video streams in real-time is a demanding task, with inherent limits on the number of streams an individual can effectively oversee. The effectiveness of monitoring depends significantly on the nature of the tasks involved. For instance, simply detecting motion to draw attention is relatively straightforward and requires minimal focus. However, monitoring for more specific concerns, such as ensuring safe distances between workers and machinery or identifying unwanted movements, and harmful behaviors, demands substantial cognitive effort and attention by the monitoring staff.

Therefore, the more specific the monitoring requirements, the greater the need for dedicated staff. For instance, ensuring that workers in a factory maintain safe distances from hazardous machinery involves continuous, focused observation. This is a complex task that cannot be easily automated and requires trained personnel. The trade-off between the number of staff, the behaviors to be monitored, the reliability of observations, and the associated business risks is intricate. Thus, based on the solutions provided by the conventional techniques, it is not enough to assume that the mere presence of surveillance cameras will guarantee effective monitoring.

Consequently, inadequate surveillance can lead to significant risks, including safety hazards, security breaches, and operational inefficiencies. Furthermore, incomplete coverage due to insufficient cameras or poor image quality can result in critical areas being overlooked. This, in turn, increases the likelihood of accidents or security incidents at the industrial site going unnoticed. Inattentional blindness, where monitoring staff fail to notice unexpected events while focusing on their primary tasks, is another concern. Such challenges can be particularly problematic in high-stress environments where staff must monitor multiple streams simultaneously.

In some conventional techniques, limited recovery and documentation of serious events are also potential issues with inadequate remote video surveillance. For instance, high-quality video footage is crucial for investigating incidents, identifying causes, and implementing corrective measures. Poor image quality or gaps in coverage can hinder these processes, leading to unresolved issues and repeated problems. Moreover, the perceived security of remote video surveillance can be misleading. Simply knowing that someone might see something is not enough. The actual likelihood of critical observations being made and acted upon must be reliably measured and ensured.

Therefore, maintaining a balanced investment in remote video surveillance infrastructure with effective monitoring is a complex challenge for large industrial sites, which the conventional techniques have failed to solve. While cutting costs by reducing camera quality or coverage might seem an option, it can lead to significant risks and potential liabilities. Conversely, over-investing in remote video surveillance without considering staffing capabilities can result in inefficiencies and wasted resources. Thus, it is required to find an optimal balance that ensures comprehensive coverage, high-quality imaging, and sufficient staffing for effective monitoring.

Additionally, conventional techniques have failed to use innovative solutions, such as integrating advanced analytics and artificial intelligence (Al), to enhance remote video surveillance effectiveness. AI can assist in monitoring specific behaviors or identifying potential threats, reducing the cognitive load on human observers. By augmenting human capabilities with technology, facilities can achieve better surveillance outcomes without disproportionately increasing costs.

Furthermore, in the conventional techniques network usage and the challenges of remote video surveillance in intermittent connectivity present significant obstacles. The remote video surveillance relies on continuous, stable network connections to transmit live video feeds and store data centrally. Particularly, at industrial sites with poor or intermittent connectivity, maintaining consistent video quality and real-time monitoring becomes challenging. For instance, interruptions in the network leads to gaps in surveillance coverage, delayed detection of incidents, and potential loss of critical video footage. Thus, such issues necessitate robust network infrastructure and redundancy measures to ensure uninterrupted surveillance, which can further drive up costs of remote video surveillance.

In light of the above, there exists a need for an improved system and method for real-time remote surveillance at industrial sites for safety and security.

Therefore, it is an object of the present invention to provide a system, apparatus, and method for monitoring a site, with effective surveillance, careful consideration of costs, coverage, and staffing.

Throughout the present disclosure, the term "site", "industrial environment" and "technical installation" as used herein interchangeably refers to a set-up with a plurality of assets such as a power plant, wind farm, power grid, manufacturing facility, process plants, buildings (residential or non-residential areas), farmlands, ship dockyard, and so on. Examples of a site, an industrial environment or technical installation may include a complex industrial set-up such as a manufacturing facility, process plant, storage facility, or transportation. It will be appreciated that the industrial environment may refer to any vertical and/or domain in business. For example, different verticals treated as site or industrial environments for the purpose of this disclosure, may include but not limited to automobiles, textiles, every distribution, energy production, buildings, factories, and medical equipment. For the sake of simplicity and brevity of the invention, the invention is explained with respect to the industrial environment. A person skilled in the art would understand that the concepts disclosed herein can be applied across multiple domains such as finance, marketing, legal, medicine, etc. Therefore, the claims appended herein shall be construed as limiting to the industrial environment only.

Throughout the present disclosure, the term "insight knowledge base" or "knowledge base" as used herein refers to a heterogeneous database comprising information pertaining to the domain and the site. The insight knowledge base is a centralized repository or database that contains domain-specific information, asset-specific information, process-specific information, sensor-specific information, visual capturing device information etc. The knowledge base also contains information relevant to the specific industry, sector, or domain in which the organization operates. This may include technical specifications, manufacturing processes, equipment manuals, safety procedures, regulatory requirements, and industry standards. The insight knowledge base also comprises information retrieved from one or more AI models deployed in an edge device. The knowledge base also comprises information extracted from documentation of a contextual baseline of the site, routine activities at the site, baseline environment and baseline activities on the site, one or more objects located at the site, performance parameters, efficiency parameters, drifts, anomalies, root cause analysis, prediction, resolution anomalies, etc. The insight knowledge base also comprises information extracted from knowledge graphs comprising information on the site and its assets in a hierarchical manner. The knowledge base also comprises images, videos, audio etc. having information on the site.

Throughout the present disclosure, the term "edge device" or "apparatus" as used herein refers to computing devices for processing data at or near the source of data generation, rather than relying on a centralized data-processing system. The edge device is typically positioned at the periphery of a network, close to where data such as a real-time feed or visual input is created, enabling real-time data processing and analysis. In a non-limiting example, edge devices may include routers, sensors, cameras, and other Internet of Things (loT) devices equipped with processing capabilities. In an aspect, edge devices can reduce latency by performing computations locally thus improving response times and decreasing the amount of data transmitted to central servers.

Throughout the present disclosure, the term "drifts" or "anomalies" or "deviation" refer to changes from the routine activities or normal patterns at the site. The drifts are essentially unexpected variations in the timing, sequence, or nature of activities at the site. In an aspect, the detection of the drifts can identify potential security threats, operational issues, or unusual events that differ from the established normal context at the site.

Throughout the present disclosure, the term "contextual baseline" as used herein refers to a stored repository of typical or expected conditions and activities at the site. The contextual baseline pre-stored in the insight knowledge base serves as a reference point against which real-time feed is compared for detecting any drifts or deviations or anomalies by the edge device. The contextual baseline is generated by the edge device using recurring visual inputs from the visual capturing devices, such as cameras installed at the site. The contextual baseline includes a baseline environment representing the physical and static aspects of the site. Further, the contextual environment includes baseline activities representing regular and expected dynamic behaviors and movements associated with the human force and machinery or any other assets, occurring at the site.

Throughout the present disclosure, the term "one or more objects", "assets" or "one or more assets" may refer to any device, system, instrument or machinery manufactured or used in an industry that may be employed for performing an operation. In some cases, assets may also include any devices or instruments deployed or functioning in a non-industrial environment such as buildings. Examples of assets include any machinery in the site or technical installation/facility such as motors, gears, bearings, shafts, switchgear, rotors, circuit breakers, protection devices, remote terminal units, transformers, reactors, disconnectors, gear-drive, gradient coils, magnet, chillers, radio frequency coils, appliances, electronic devices, chillers, pumps, heat exchangers, cooling towers, air compressors, boilers, fluid bed driers, coating machines, carbonation towers etc. The "one or more objects", may be present in space of the site.

Throughout the present disclosure, the term "site" may refer to the physical environment of the site and may include the floors, walls or particularly a field-of-view of the site which may or may not contain the one or more objects.

Throughout the present disclosure, the term "visual capturing devices" as used herein refers to a primary source for capturing visual input or the real-time feed while monitoring the site. The visual capturing devices are responsible for collecting real-time visual inputs, which are then processed by the edge device to detect drifts or anomalies and ensure the safety and security of the monitored site. In a non-limiting example, the visual capturing devices include surveillance cameras, thermal cameras, infrared cameras, or any other transmission device equipped with cameras for ad-hoc or supplementary monitoring, particularly in areas where permanent installations of the camera are not feasible.

Throughout the present disclosure, the term "visual input" as used herein refers to raw data captured by the visual capturing devices installed at the site. The visual input comprises images and/or video footage that depict spaces, the physical environment and activities occurring at the site. The visual input is the primary source of information that the edge device uses to build and maintain the insight knowledge base, consequently representing the contextual baseline of the site.

Throughout the present disclosure, the term "real-time feed" as used herein refers to a continuous stream of the visual input that is transmitted from the visual capturing devices to the edge device in the real-time. This feed enables the system to monitor the site continuously and detect any drifts, deviations or anomalies as they occur at the site. The real-time feed and the visual input may be interchangeably used within the scope of the present disclosure.

Throughout the present disclosure, the term "visual frames" as used herein refers to individual images or snapshots extracted from the real-time feed captured by the visual capturing devices. The visual frames are crucial for analyzing specific moments in time, particularly in response to detected anomalies or contextual drifts. In a non-limiting example, visual frames may represent discrete images taken from a stream (visual input). In the context of remote surveillance and monitoring of the site, the stream or the visual input is composed of a series of such frames displayed in rapid succession, creating the illusion of continuous motion. Each frame captures a single, static image of the scene at a specific point in time.

Throughout the present disclosure, the term "contextual drift" as used herein refers to a deviation or change from the normal or expected conditions and activities at a monitored site, as established by the contextual baseline, which may cause anomaly at the site. The contextual baseline includes both the baseline environment and baseline activities, which represent the typical or expected state of the site based on historical data. When real-time feed from the visual capturing devices shows a significant change compared to this baseline, it is identified as a contextual drift. The contextual drift includes deviations in the physical and static aspects of the site, for instance, alterations in the layout of the site, unexpected objects appearing at the site, structural changes, or even shifts in lighting conditions. Furthermore, contextual drift includes variations in the regular dynamic behaviors and movements at the site for instance, unusual human or machine activities, irregular vehicle movements, or deviations from standard workflows and processes.

Throughout the present disclosure, the term "user" as used herein refers to a human interacting with the system for monitoring or being monitored.

Through the present disclosure, the term "routine activities" refers to regular, expected, and typically observed actions and behaviors that occur within the monitored site. The routine activities form the contextual baseline i.e., considerations of normal operations and thus establish the contextual baseline against which drifts, anomalies and deviations can be detected. In an example, the routine activities may be the standard, habitual actions and processes that are performed by the users or humans employed at the site.

Throughout the present disclosure, the term "pre-drift stream" may refer to a segment of the real-time feed (visual input) that captures the scene at the site prior to the detection of the contextual drift. The pre-drift stream is crucial for understanding the routine activities and conditions leading up to the detected drift or anomaly.

Throughout the present disclosure, the term "post-drift stream" may refer to a segment of the real-time feed (visual input) that captures the scene at the site after the contextual drift has ended. This stream is advantageous for understanding the aftermath and resolution of the detected drift or anomaly.

Through the present disclosure, the term "one or more AI models" refers to a plurality of artificial intelligence neural networks. Examples of neural networks include but are not limited to, convolutional neural network (CNN), deep neural network (DNN), recurrent neural network (RNN), and Restricted Boltzmann Machine (RBM). The learning technique for training each AI model uses a plurality of learning data to cause, allow, or control the system to make a determination or analysis. Examples of learning techniques include but are not limited to supervised learning, unsupervised learning, semi-supervised learning, or reinforcement learning. At least one of a plurality of CNN, DNN, RNN, RMB models and the like may be implemented to thereby achieve execution of the present subject matter's mechanism through the AI models

Furthermore, the one or more AI models may include a "drift detection neural network model", referring to an advanced AI model adapted to identify drifts or deviations from the established contextual baseline at the monitored site. This model plays a crucial role in detecting drifts by continuously analyzing the real-time visual data. In an example, the drift detection neural network model may be a type of artificial neural network (ANN) adapted to detect changes or "drifts" in the patterns of the visual data compared to the contextual baseline. In the example, when the real-time feed deviates significantly from the contextual baseline, the drift detection neural network model may detect these deviations as contextual drifts.

Furthermore, the one or more AI models may include a "segmentation artificial intelligence (Al) model", referring to the AI model adapted to partition the visual input into meaningful segments or regions. The segmentation AI model is essential for identifying and distinguishing one or more objects within the scene captured by the visual capturing devices. In an example, the segmentation AI model may process the visual data (such as images or video frames) to divide it into distinct segments. Consequently, each segment may correspond to a specific object or region within the visual input. Thus, recognizing and categorizing objects within the scene.

Furthermore, the one or more AI models may include a "temporal context AI model", referring to the AI model adapted to analyze and interpret the temporal aspects of activities at the monitored site. The temporal context AI model is adapted to understand the timing, duration, and sequence of events, which provides a dynamic perspective on the site's operations and activities. Thereafter, the temporal context AI model focuses on the dynamic aspects of the site, such as the interaction of the one or more objects and individuals over time, rather than just static snapshots.

Throughout the present disclosure, the term "Euclidean distance value" may refer to a mathematical computation or metric used to quantify the difference or distance between two points in a multi-dimensional space (the monitoring site). The Euclidean distance value is particularly useful for comparing the current state of activities at the site with the established contextual baseline.

The object of the present invention is achieved by a computer-implemented method for remote monitoring and anomaly detection at the site. The method comprises receiving, by one or more processors, an insight knowledge base based on at least one recurring visual input received from one or more visual capturing devices installed at the site. Advantageously, the one or more visual capturing devices are crucial for monitoring the site. The one or more visual capturing devices continuously capture visual input from various parts of the site. The visual input serves as the foundation for generating the insight knowledge base, which represents the contextual baseline of the site. Further, the one or more visual capturing devices provide real-time feeds that are sent to the edge device for immediate processing. This allows for the detection of the contextual drift and anomalies as they occur at the site. In another advantageous aspect, the one or more visual capturing devices enable continuous data capture and real-time feed transmission to enable prompt detection and response to drift or anomalies, thus enhancing site security and safety. In an example, different types of the one or more visual capturing devices may provide multiple perspectives for instance, aerial, ground-level, thermal, etc., thus contributing to a holistic understanding of the site's condition or environment. Furthermore, the one or more visual capturing devices may also be easily scaled by adding more visual capturing devices to cover larger or more complex sites.

In an embodiment, the insight knowledge base indicates a stored repository of the contextual baseline of the site. Advantageously, the insight knowledge base enhances the effectiveness, efficiency, and reliability of the present computer-implemented method for site monitoring and anomaly detection. In an example, the insight knowledge base provides a comprehensive repository of contextual information, thus improving anomaly detection, operational efficiency, safety, security, historical analysis, scalability, and decision-making. Thus, the benefits of the insight knowledge base collectively contribute to a more robust and responsive surveillance system, ensuring the site operates smoothly and securely.

In an embodiment, the contextual baseline includes a baseline environment and baseline activities on the site. In an advantageous aspect, establishing the baseline environment assists in creating an accurate map of the site's physical conditions. Thus, the baseline environment is crucial for identifying changes or disruptions in the physical layout, such as new objects, structural changes, or environmental anomalies for instance, e.g., unusual temperature fluctuations. Thus, by continuously comparing real-time environmental data with the baseline, the system can monitor for consistency. This ensures that the physical conditions remain optimal for operations, enhancing safety and efficiency. Further, the baseline environment aids in detecting unauthorized changes or intrusions. For instance, unexpected objects or alterations in the baseline environment of the site may be flagged as potential security threats, prompting timely investigation and response.

Furthermore, in an advantageous aspect, the baseline activities include recording the typical behaviors and operations at the site. The baseline activities are essential for identifying drifts that may indicate anomalies, such as unusual movements, unauthorized access, or irregular operational patterns. Thus, the baseline activities represent an understanding of normal activities on the site. For instance, if a routine task is not performed as expected or if there are unexpected interactions between objects and individuals, the system can flag these as potential issues different from the baseline activities.

In an embodiment, the method further comprises identifying one or more objects located at the site based on the visual input received from the one or more visual capturing devices using a segmentation artificial intelligence (Al) model. Advantageously, the segmentation AI model is adapted to partition the visual input into distinct segments, thus identifying objects, and determining spatial positions of the objects. The segmentation AI model plays a crucial role in generating the insight knowledge base and enhancing the accuracy and effectiveness of the site monitoring and anomaly detection. The segmentation AI model supports detailed analysis and monitoring by accurately identifying and positioning objects, contributing to improved security, safety, and operational efficiency.

The method further comprises determining a position of each of the identified one or more objects within the site based on spatial coordinates using the segmentation AI model.

In an embodiment, the method further comprises determining a temporal context based on monitoring activities of one or more individual users corresponding to the identified one or more objects within the site using a temporal context AI model. Advantageously, the temporal context AI model is adapted analyze to the timing, duration, and sequence of activities at the monitored site.

In an example, the temporal context AI model monitors the activities of individuals and objects at the site. The temporal context AI model builds a comprehensive understanding associated with the happenings at the site based on analyzing the timing and sequence of these activities. Further, the temporal context AI model determines the temporal context by tracking the routine activities and their variations over time. Thus, the temporal context determined in an example may include understanding peak activity times, typical movement patterns, and regular interactions. Furthermore, in an advantageous aspect, an output of the temporal context AI model is used to generate or reinforce the insight knowledge base. Consequently, the temporal context AI model detects drifts or anomalies from routine activities based on understanding the normal temporal context. Thus, the temporal context is crucial for identifying potential security threats, operational issues, or unusual events at the site.

Consequently, generating the insight knowledge base based on correlating the temporal context and the identified one or more objects such that the insight knowledge base comprises a repository of routine activities performed at the site.

In an embodiment, the method further includes receiving a real-time visual input from the one or more visual capturing devices and identifying an activity different from the routine activities based on monitoring activities of one or more individual users in the real-time visual input for generating the insight knowledge base.

Further, the method comprises detecting, by the one or more processors, a contextual drift at the site based on comparing a real-time feed received from the one or more visual capturing devices and the insight knowledge base using a drift detection neural network model.

The contextual drift indicates a deviation in the contextual baseline associated with a scene of the site.

In an embodiment, the method further includes monitoring the real-time feed from the one or more visual capturing devices and computing a Euclidean distance value between current temporal activities performed in the real-time feed and the contextual baseline of the insight knowledge base using the drift detection neural network model.

In an example, the contextual drift represents a deviation from the established contextual baseline associated with the scene at the site. The contextual drift indicates that the current conditions or activities do not match the previously recorded normal state. In an advantageous aspect, the contextual drift is an indicator of anomalies or irregularities in the site's operations. Thus, recognition of the contextual drift allows the remote monitoring and anomaly detection system to adapt to changes in the site's environment and activities, ensuring continuous and accurate surveillance.

Further, in an advantageous aspect, the real-time feed provides continuous monitoring thus ensuring that the site is under constant observation, allowing for immediate detection of any deviations or anomalies.

Further, in an advantageous aspect, the computation of the Euclidean distance value provides quantitative metrics to measure deviations from the contextual baseline. Consequently, ensuring precise and objective detection of the contextual drifts.

Further, in an advantageous aspect, the drift detection neural network model enhances the accuracy and reliability of the remote monitoring and anomaly detection system. The drift detection neural network model learns and adapts to complex patterns, improving the ability to detect subtle or significant changes occurring at the site.

In an embodiment, the method further includes the contextual drift detection including comparing the computed Euclidean distance value against a predefined threshold. If this value exceeds the threshold for more than a predefined dwell time, thus indicates a significant deviation from the contextual baseline.

In an advantageous aspect, setting the predefined threshold ensures that only significant deviations are flagged as the contextual drift. Consequently, reducing false positives and ensuring that the remote monitoring and anomaly detection system focuses on meaningful drifts or anomalies.

Further, in an advantageous aspect, the predefined dwell time ensures that transient or short-lived deviations are not mistakenly identified as significant drifts. Therefore, the temporal consistency helps in distinguishing between any momentary fluctuations and persistent anomalies.

Consequently, the detection of the contextual drift based on the predefined threshold and predefined dwell time, the remote monitoring and anomaly detection system triggers proactive responses to address potential issues promptly. Therefore, enhancing the overall safety and efficiency of the site.

Further, the method comprises selecting, by the one or more processors, visual frames corresponding to a plurality of timestamps from the real-time feed in response to detecting the contextual drift. The visual frames comprise one or more visual frames selected for the timestamps corresponding to at least one of prior to the contextual drift, during the contextual drift, and post the contextual drift.

In an embodiment, the method further comprises creating a pre-drift stream based on the real-time feed, the pre-drift stream indicating a scene prior to detecting the contextual drift using a forgetfulness probability density function (PDF) and a selective PDF.

In an advantageous aspect, the pre-drift stream provides a reference point of normal conditions before the occurrence of the drift or the anomaly. Thus, the pre-drift stream is essential for understanding the baseline environment and activities at the site as the pre-drift stream enables a historical review of events leading up to the detected anomaly, thus providing valuable context for investigations. Consequently, based on comparing the pre-drift stream with the drift and the post-drift stream, the remote monitoring and anomaly detection system accurately identifies and analyzes drifts, anomalies or deviations.

In an advantageous aspect, the forgetfulness probability density function (PDF) represents a tool to manage the retention of data (visual input) in the storage of the remote monitoring and anomaly detection system. The forgetfulness PDF assists in efficiently managing the storage of the visual input by discarding older, less relevant frames while retaining important visual input (occurrence of drift). Advantageously, the forgetfulness PDF ensures that storage resources are used optimally, focusing on retaining critical visual input that may be needed for analysis and investigation for the anomaly detection.

In an advantageous aspect, the selective PDF represents the determining importance associated with each visual frame based on specific criteria. Advantageously, the selective PDF ensures that only the most relevant visual frames are selected and retained in the storage, improving the efficiency and effectiveness of the remote monitoring and anomaly detection system. Thus, the selective PDF enhances the anomaly detection based on selecting frames that are more likely to contain significant information, the remote monitoring and anomaly detection system improves the accuracy of the anomaly detection. Additionally, the selective PDF enables the prioritization of the visual frames that meet specific criteria, for instance, the visual frames illustrating unusual activities or important events.

In an embodiment, the method further comprises creating a drift stream based on the real-time feed in response to detecting contextual drift, wherein the drift stream indicates a scene during the contextual drift.

In an embodiment, the method further comprises storing the pre-drift stream and the drift stream in a single circular buffer.

In an advantageous aspect, the single circular buffer represents a data structure having a fixed-size buffer to store data (visual input) in a continuous loop, thus, overwriting the oldest data (visual input) when the single circular buffer is full. Advantageously, the single circular buffer enables continuous data recording/storage without the need for unlimited storage, as the old data (visual input) is overwritten by new data (visual input). Thus, the single circular buffer ensures that there is always a continuous stream of recent data (visual input i.e., the real-time feed) available, which is crucial for real-time monitoring and analysis of the site for remote monitoring and anomaly detection.

In an embodiment, the method further creates a post-drift stream based on the real-time feed, using a scene significance probability density function (PDF) and a selective PDF, wherein the post-drift stream indicates a scene after the contextual drift has ended and thus selecting the visual frames among the pre-drift stream, the drift stream, and the post-drift stream.

In an advantageous aspect, the post-drift stream refers to the segment of visual data that captures the scene at the site after the contextual drift has ended. Thus, the post-drift stream provides insights into the return of the site to normal operations after the occurrence of the anomaly or the deviation, helping to assess the impact and recovery process.

In an advantageous aspect, the scene significance probability density function (PDF) is adapted to assess the importance of the visual frames based on associated significance in the context of the scene. Advantageously, the scene significance probability density function ensures that the most significant visual frames are selected and retained, improving the overall quality of the data (visual input) used for monitoring and analysis of the site. Thus, the scene significance PDF assists in focusing the analysis on the visual frames that are more likely to contain important information, enhancing the effectiveness of the remote monitoring and anomaly detection system. Furthermore, in an advantageous aspect, the scene significance PDF optimizes the use of computational and storage resources by prioritizing significant data, thereby reducing the burden of processing and storing less important frames.

Further, the method comprises transmitting, by the one or more processors, the visual frames for remote monitoring and anomaly detection at the site.

In an embodiment, the method further transmits in real-time the visual frames selected for the timestamps corresponding to at least one of, the pre-drift, drift, and post-drift streams using the single circular buffer, for remote monitoring at the site.

In an embodiment, the method further assigns an adaptive frame rate to the visual frames corresponding to at least one of, the pre-drift stream and the post-drift stream based on an adaptive configuration associated with the site.

In an advantageous aspect, the adaptive frame rate refers to adjusting the rate at which the visual frames are captured and transmitted to a user monitoring device based on certain criteria or conditions. Advantageously, the adaptive frame rate provides optimized resource usage, adaptive configuration and real-time adaptation to changing conditions at the site. The remote monitoring and anomaly detection system based on dynamically adjusting the frame rate based on site-specific configurations, configurable drop rates, and sampling rates, balances resource usage with monitoring accuracy, ensuring efficient and effective surveillance. Consequently, improving the overall performance of the remote monitoring and anomaly detection system, thereby ensuring that critical information is captured and transmitted for remote monitoring and analysis of the site.

In an embodiment, the method further adjusts a variance in the frame rate based on at least one of, a configurable drop rate and a configurable sampling rate, wherein either the configurable drop rate or the configurable sampling rate indicates arbitrary functions corresponding to the site, thereby influencing the variance in frame capture based on site-dependent properties to balance resource usage and monitoring accuracy and transmitting a selected frame indicating a last frame among the visual frames from the single circular buffer based on the variance.

In an embodiment, the method further ceases the transmission of the selected visual frames corresponding to at least one of the drift streams in response to determining the termination of the contextual drift and subsequent to a predefined time period corresponding to the visual frames from the real-time feed or the post-drift stream.

In an embodiment, the insight KB is updated based on adding new information or modifying existing repository to reflect recent observations, findings, or changes in patterns. Consequently, the edge devices continually learn from real-time visual inputs to keep the insight knowledge base current and relevant. Advantageously, updating the insight knowledge base ensures that the remote monitoring system maintains an accurate and up-to-date understanding of the activities and anomalies occurring at the monitored site.

The object of the present invention is also achieved by an apparatus for remote monitoring of the site. The apparatus comprises a memory and one or more processors communicatively coupled to the memory. The memory comprises programmable instructions executable by the one or more processors. The programmable instructions, when executed by the one or more processors, cause the one or more processors to perform one or more methods, as discussed throughout the present invention.

The object of the present invention is also achieved by a system for remote monitoring of the site. In an embodiment, the system includes the one or more visual capturing devices installed at the site. Further, the one or more visual capturing devices are communicatively coupled with the one or more AI models and the apparatus for remote monitoring of the site based on performing one or more methods, as discussed throughout the present invention.

The object of the present invention is also achieved by a computer-program product being disclosed. The computer-program product has machine-readable instructions stored therein, that when executed by one or more processors, cause the one or more processors to perform one or more methods, as discussed throughout the present invention.

The object of the present invention is also achieved by a non-transitory computer-readable medium being disclosed. The non-transitory computer-readable medium is encoded with executable instructions, that when executed by one or more processors, cause the one or more processors to perform one or more methods, as discussed throughout the present invention.

To further clarify the advantages and features of the present invention, a more particular description of the invention will be rendered by reference to specific embodiments thereof, which are illustrated in the appended drawings. It is appreciated that these drawings depict only typical embodiments of the invention and are therefore not to be considered limiting of its scope. The invention will be described and explained with additional specificity and detail with the accompanying drawings.

These and other features, aspects, and advantages of the present invention will become better understood when the following detailed description is read with reference to the accompanying drawings in which like characters represent like parts throughout the drawings, wherein:
FIG 1 illustrates a block diagram of a system for remote monitoring of the site, in accordance with an embodiment of the present invention;
FIG 2 illustrates a block diagram of the apparatus for remote monitoring of the site, in accordance with an embodiment of the present invention;
FIG 3 illustrates a functional block diagram of the system for remote monitoring of the site, in accordance with an embodiment of the present invention;
FIG 4 illustrates a representation of a transmission of visual frames for remote monitoring of the site, in accordance with an embodiment of the present invention; and
FIG 5 illustrates a flow chart of a method for remote monitoring of the site, in accordance with an embodiment of the present invention.

Further, skilled artisans will appreciate that elements in the drawings are illustrated for simplicity and may not have necessarily been drawn to scale. For example, the flow charts illustrate the method in terms of the most prominent steps involved to help improve understanding of aspects of the present invention. Furthermore, in terms of the construction of the device, one or more components of the device may have been represented in the drawings by conventional symbols, and the drawings may show only those specific details that are pertinent to understanding the embodiments of the present invention so as not to obscure the drawings with details that will be readily apparent to those of ordinary skill in the art having the benefit of the description herein.

For the purpose of promoting an understanding of the principles of the invention, reference will now be made to the various embodiments and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are explanatory of the invention and are not intended to be restrictive thereof.

Reference throughout this specification to "an aspect", "another aspect" or similar language means that a particular feature, structure, or characteristic described in connection with the embodiment is included in at least one embodiment of the present invention. Thus, appearances of the phrase "in an embodiment", "in another embodiment" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

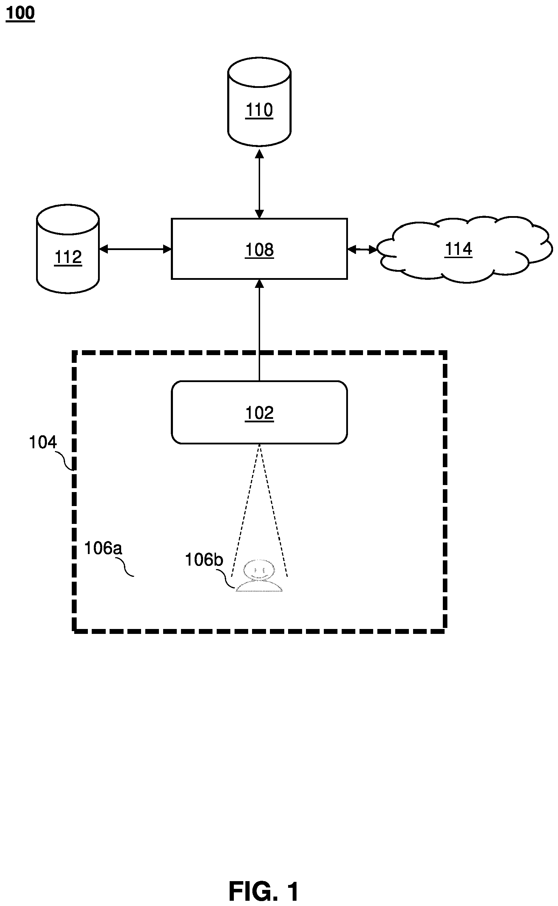

FIG 1 illustrates a block diagram of a system 100 for remote monitoring of a site 104, in accordance with an embodiment of the present invention. The system includes a visual capturing devices 102 installed at the site 104, space 106a within the site 104, one or more objects 106b at the site 104, an edge device 108, an insight knowledge base 110, a remote database 112, and a remote device 114.

In an embodiment, the edge device 108 is adapted to receive continuous visual inputs from the one or more visual capturing devices 102 installed at the site 104. Referring to Fig. 1, while single edge device 108 and single one or more visual capturing devices 102 are depicted, it may be apparent to the ordinary person skill in the art that "one or more" combinations may be deployed at the same time.

The edge device 108 indicates computing devices for processing data at or near the source of data generation, rather than relying on a centralized data-processing system. In a non-limiting example, edge devices may include routers, sensors, cameras, and other Internet of Things (IoT) devices equipped with processing capabilities and communicatively coupled to the one or more visual capturing devices 102.

In an advantageous aspect, the edge device 108 optimizes the usage of computational and network resources based on filtering and processing visual input locally. Thus, edge device 108 reduces the amount of data that needs to be transmitted over the network. This conserves bandwidth and ensures that only relevant information is sent for remote monitoring. Further, the localized processing of the visual input allows for the selective storage and transmission of visual frames, thus ensuring that only pertinent data is stored, thereby optimizing storage resources.

In an embodiment, the edge device 108 is deployed on a one-to-one basis with the one or more visual capturing devices 102 or in a one-to-many configuration, depending on the monitoring requirements of the site.

In another embodiment, the edge device 108 is an apparatus. As used herein "edge computing" refers to a computing environment that is capable of being performed on an edge device (e.g., connected to one or more sensing units in an industrial setup and to a remote server(s) such as for computing server(s) or cloud computing server(s) on other end), which may be a compact computing device that has a small form factor and resource constraints in terms of computing power. A network of the edge computing devices can also be used to implement the apparatus. Such a network of edge computing devices is referred to as a fog network.

In another embodiment, the edge device 108 as the apparatus is deployed in a cloud computing environment. As used herein, "cloud computing environment" refers to a processing environment comprising configurable computing physical and logical resources, for example, networks, servers, storage, applications, services, etc., and data distributed over the network, for example, the internet. The cloud computing environment provides on-demand network access to a shared pool of configurable computing physical and logical resources. The apparatus comprises of a network interface (not shown) for communicating with the one or more edge devices 108 via the network.

In another embodiment, the edge device 108 as the apparatus is deployed in the one or more visual capturing devices 102.

The one or more visual capturing devices 102 refers to a primary source for capturing visual input or the real-time feed while monitoring the site. The one or more visual capturing devices 102 are responsible for collecting real-time visual inputs, which are then processed by the edge device 108 to detect drifts or anomalies and ensure the safety and security of the monitored site 104. In a non-limiting example, the one or more visual capturing devices 102 may include surveillance cameras, thermal cameras, infrared cameras, or any other transmission device equipped with cameras for ad-hoc or supplementary monitoring, particularly in areas where permanent installations of the camera are not feasible.

In an embodiment, the edge device 108 is adapted to generate an insight knowledge base 110 based on the visual inputs captured by the one or more visual capturing devices 102. The insight knowledge base 110 indicates a contextual baseline thereby forming a comprehensive repository of normal activities and interactions occurring at the site 104. The contextual baseline serves as a critical reference for identifying deviations, thus ensuring accurate anomaly detection at the site 104.

In an embodiment, the insight knowledge base 110 may be distributed into two categories, such as a primary knowledge base and a secondary knowledge base.

The primary knowledge base (KB) indicates a repository of frequently occurring activities, geofences, and machine-operator interactions at the site 104. The primary knowledge base serves as the core reference for understanding the routine operations and interactions within the site 104. In an example scenario, in a factory setting, the primary KB may store information about the standard steps involved in the manufacturing process, such as assembly line stages, quality checks, and packaging. In the example scenario, the primary KB may also track regular employee movements, such as workers moving between different sections of the factory floor or taking scheduled breaks. In the example scenario, the primary KB may include geofences that define restricted areas within the site 104, such as zones with hazardous materials or sensitive equipment. Further, in the example scenario, the primary KB may also demarcate operational zones, such as areas designated for specific tasks like welding, assembly, or inspection. Furthermore, in the example scenario, the primary KB may capture regular interactions between operators and machines, such as standard procedures for machine start-up, operation, and shut-down. Furthermore, in the example scenario, the primary KB may document safety protocols, like mandatory safety checks before operating certain machines or the use of personal protective equipment (PPE).

In an advantageous aspect, the primary KB provides a robust foundation for detecting anomalies or deviations from the norm on the site 104 based on maintaining a detailed record of routine activities and interactions. Thus, assisting in streamlining operations by clearly defining standard procedures and protocols, thereby enhancing overall efficiency.

The secondary KB indicates a repository for tracking of activities that are less frequent but still regular at the site 104. The secondary KB captures the nuances of site operations by documenting occasional or periodic activities that might not occur daily but are essential to the site's 104 functioning. In an example scenario, in an industrial setting, the secondary KB may store information about scheduled maintenance activities, such as monthly equipment inspections or bi-weekly cleaning protocols. In an example scenario, the secondary KB may also track activities related to special projects, like temporary modifications to the production line for a limited-run product. In an example scenario, the secondary KB may document changes in workforce numbers or shifts during peak seasons, such as additional staff during holiday seasons in a retail warehouse. Further, in the example scenario, the secondary KB may also capture seasonal changes in the environment, for instance, increased HVAC usage during summer or specific pest control measures in certain months.

In an advantageous aspect, the secondary KB ensures a comprehensive understanding of all site operations, and not just the daily routines by including less frequent activities. Thus, the secondary KB captures occasional activities helping in distinguishing between genuine anomalies and infrequent but normal operations, thereby enhancing the accuracy of anomaly detection.

In an embodiment, as the one or more visual capturing devices 102 continuously sends real-time feed, the edge device 108 is adapted to detect a contextual drift at the site 104. The edge device 108 compares the real-time feed and the insight knowledge base 110 using a drift detection neural network model. The drift detection neural network model detects deviations, indicating a contextual drift whenever there is a significant departure from the established contextual baseline associated with a scene of the site 104. Thereby, advantageously, the immediate identification of deviations based on comparing the real-time feed and the insight knowledge base 110 allows for prompt corrective actions, ensuring enhanced security and safety at the site 104.

In an embodiment, the edge device 108 is adapted to select visual frames corresponding to a plurality of timestamps from the real-time feed. The selection of the visual frames is in response to detecting the contextual drift. The visual frames are selected for the timestamps prior to the contextual drift i.e., pre-drift. Alternatively, the visual frames are selected for the timestamps during the contextual drift, and post the contextual drift i.e., post-drift. Advantageously, capturing the visual frames corresponding to the pre-drift, during the contextual drift, and the post-drift ensures a complete record for analysis.

In an embodiment, the edge device 108 is adapted to transmit the selected visual frames to remote device 114 for remote monitoring and anomaly detection at the site. In an advantageous aspect, transmitting the visual frames to the remote devices 114 such as a cloud allows for remote access, enhancing operational flexibility and decision-making.

Thus, the edge device 108 operates in three parallel modes, thereby ensuring comprehensive functionality. The edge device 108 operates as an insight generation model thus, continuously updating the insight knowledge base 110 with new data, adapting to changes in the environment or the site 104. Further, the edge device 108 is triggered on user-input or in response to detecting the contextual drift in the real-time feed. Thereby, the edge device 108 provides constant checks for deviations from the contextual baseline, providing real-time anomaly detection. Furthermore, the edge device 108 performs selective transmission of only the selected visual frames, thus, optimizing bandwidth and storage usage of the remote monitoring and surveillance system 100.

In an example scenario, the system 100 may be deployed for factory floor monitoring to ensure the safety and security of factory operations. In the example scenario, the factory facility may be equipped with multiple visual capturing devices 102 (cameras) strategically placed to cover different areas, such as production lines, storage areas, and entry/exit points. These cameras are connected to edge device 108 which utilizes the above-described method for real-time monitoring and anomaly detection at the factory facility.

In the example scenario, the edge device 108 continuously receives the visual inputs from the cameras installed throughout the factory facility. The edge device 108 identifies frequently occurring activities, for instance, regular machine operations, routine worker movements, and standard material handling processes. The frequently occurring activity is stored in the primary KB of the insight KB 110. Further, less frequent but regular activities, for instance, maintenance checks, periodic inspections, and occasional deliveries may be stored in the secondary KB of the insight KB 110.

In the example scenario, the edge device 108 compares the real-time feed from the cameras 102 with the established contextual baseline using the drift detection neural network model. For instance, a machine malfunctions and starts operating erratically, or an unauthorized person enters a restricted area of the factory facility. Such events cause a deviation from the contextual baseline and thus the edge device 108 detects the contextual drift. Immediate detection of such anomalies may allow for quick intervention, thus preventing potential damage or security breaches at the factory facility.

In the example scenario, the edge device 108 selects visual frames that capture the scene just before the detected anomaly, showing normal operations. The visual frames during the anomaly, for instance, the moment the machine starts malfunctioning or the unauthorized entry occurs may be selected to document the event. The visual frames after the anomaly capture the resolution of the incident, for instance, the machine being repaired, or the unauthorized person being escorted out.

In the example scenario, the edge device 108 transmits the selected visual frames to the cloud 114 for remote monitoring. Thus, the factory facility managers and security personnel access the transmitted visual frames from their control rooms or mobile devices. Therefore, the capture and transmission of the selected visual frames by the edge device 108 ensures that all aspects of the incident may be documented for review and analysis.

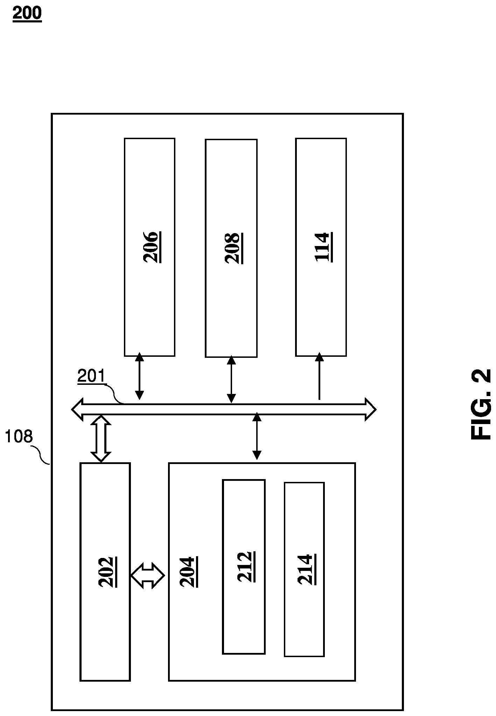

FIG 2 illustrates a block diagram of the edge device 108 for remote monitoring of the site, in accordance with an embodiment of the present invention.

As shown in FIG 2, the edge device 108 deployed as the apparatus comprises a bus 201, a processing unit 202, a memory unit 204, a communication unit 206, an I/O interface 208, and an output unit alternatively referred to as the remote device 114. The edge device 108 can be a computer, a workstation, or a virtual machine running on host hardware. As an alternative, the apparatus 108 can be a real or a virtual group of computers (the technical term for a real group of computers is "cluster", the technical term for a virtual group of computers is "cloud").

The processing unit 202 may include one or more processors as a single processing unit or several units. The processing unit 202 may be implemented as one or more microprocessors, microcomputers, microcontrollers, digital signal processors, central processing units, state machines, logic circuitries, and/or any devices that manipulate signals based on operational instructions. Among other capabilities, the one or more processors are configured to fetch and execute computer-readable instructions and data stored in the memory unit 204.

The memory unit 204 includes one or more computer-readable storage media that can communicate via the bus 201. The memory unit 204 may include non-volatile storage elements. Examples of such non-volatile storage elements may include magnetic hard discs, optical discs, floppy discs, flash memories, or forms of electrically programmable memories (EPROM) or electrically erasable and programmable (EEPROM) memories. In addition, the memory may, in some examples, be considered a non-transitory storage medium. The term "non-transitory" may indicate that the storage medium is not embodied in a carrier wave or a propagated signal. However, the term "non-transitory" should not be interpreted to mean that the memory is non-movable. In certain examples, a non-transitory storage medium may store data that can, over time, change (e.g., in Random Access Memory (RAM) or cache.

The memory unit 204 may further include any non-transitory computer-readable medium known in the art including, for example, volatile memory, such as static random-access memory (SRAM) and dynamic random-access memory (DRAM), and/or non-volatile memory, such as read-only memory (ROM), erasable programmable ROM, flash memories, hard disks, optical disks, and magnetic tapes.

The memory unit 204 includes a database 212. The database 212 is configured to be accessed by the processing unit 202 and stores information as required by processing unit 202 to perform the one or more functions. The database 212 may store the insight KB 110. The database 212 may also store historical data including information of past contextual drifts, corrective actions, and preventive actions in the past. Additionally, the database 212 may serve dual functions in storing different types of information. Primarily, it holds the insight KB 110, most of which is generated based on the visual inputs from the one or more visual capturing devices 102.

The AI/ML module 214 may include an Artificial Intelligence (Al) model and Large Language Models (LLMs). Each AI model may include a plurality of neural network layers. Examples of neural networks include but are not limited to, convolutional neural network (CNN), deep neural network (DNN), recurrent neural network (RNN), and Restricted Boltzmann Machine (RBM). The learning technique for training each AI model uses a plurality of learning data to cause, allow, or control the system 100 to make a determination or analysis. Examples of learning techniques include but are not limited to supervised learning, unsupervised learning, semi-supervised learning, or reinforcement learning. At least one of a plurality of CNN, DNN, RNN, RMB models and the like may be implemented to thereby achieve execution of the present subject matter's mechanism through the AI models. A function associated with the AI/ML module 214 may be performed through the non-volatile memory, the volatile memory, and the processing unit 202.

The communication unit 206 is configured to communicate sensor data, or any other content over a communication network via a communication port or interface or using the bus 201. Further, the communication unit 206 may include a communication port or a communication interface for sending and receiving signals from the edge device 108 via the communication network. The communication port or the communication interface may be a part of the processing unit 202 or may be a separate component. The communication port may be created in software or may be a physical connection in hardware. The communication port may be configured to connect with the communication network, external media, the display, or any other components in the system 100, or combinations thereof. The connection with the communication network may be a physical connection, such as a wired Ethernet connection, or may be established wirelessly as discussed above. Likewise, the additional connections with other components of the system 100 may be physical or may be established wirelessly. The communication unit 206 may include the Wi-Fi module or Bluetooth module for enabling wireless communication capability and data exchange capability between various modules of the system 100.

The I/O interface 208 refers to hardware or software components that enable communication between various modules of the system 100. The I/O interface 208 serves as a communication medium for exchanging information, commands, signals, or query responses with other devices or systems. The I/O interface 208 may be a part of the processing unit 202 or maybe a separate component. The I/O interface 208 may be created in software or maybe a physical connection in hardware. The I/O interface 208 may be configured to connect with an external network, external media, the display, or any other components, or combinations thereof. The external network may be a physical connection, such as a wired Ethernet connection, or may be established wirelessly.

The remote device 114 which is preferably an output unit comprises of a display device. The display device may be an Augmented Reality/Virtual Reality (AR/VR) device to display a virtual environment to the user. The display device may include a display screen. As a non-limiting example, the display screen may be Light Emitting Diode (LED), Liquid Crystal Display (LCD), Organic Light Emitting Diode (OLED), Active Matrix Organic Light Emitting Diode (AMOLED), or Super Active Matrix Organic Light Emitting Diode (AMOLED) screen. The display screen may be of varied resolutions. The remote device while operating as the output unit is further configured for presenting the selected visual frames.

The processing unit 202 is configured for generating the insight knowledge base 110 based on at least one recurring visual input received from the one or more visual capturing devices 102 installed at the site 104. Further, the processing unit 202 is also configured for identifying the space 106a and the one or more objects 106b located at the site 104 based on the visual input received from the one or more visual capturing devices 102 using a segmentation artificial intelligence (Al) model. Further, the processing unit 202 is configured for determining a position of the space 106a and each of the identified one or more objects 106b within the site 104 based on spatial coordinates using the segmentation AI model. Further, the processing unit 202 is configured for determining a temporal context based on monitoring activities of one or more individual users corresponding to the identified one or more objects within the site 104 using a temporal context AI model. Thereby, the processing unit 202 is configured for generating the insight KB 110 based on correlating the temporal context and the identified one or more objects such that the insight KB 110 comprises the repository of the routine activities performed at the site 104. Further, the processing unit 202 is also configured for reinforcing the insight KB 110 based on receiving a real-time visual input from the one or more visual capturing devices 102. The processing unit 202 is configured for identifying an activity different from the routine activities in the received real-time visual input based on monitoring activities of one or more individual users. Thereby, the processing unit 202 is configured for reinforcing or updating the insight KB 110.

The processing unit 202 is configured for detecting the contextual drift at the site 104 based on comparing the real-time feed received from the one or more visual capturing devices 102 and the insight KB 110 using the drift detection neural network model. Further, the processing unit 202 is configured for monitoring the real-time feed from the one or more visual capturing devices 102. Further, the processing unit 202 is configured for computing a Euclidean distance value between current temporal activities performed in the real-time feed and the contextual baseline of the insight knowledge base using the drift detection neural network model. Consequently, the processing unit 202 is configured for detecting the contextual drift at the site in response to determining that the Euclidean distance value exceeds a predefined threshold, for more than a predefined dwell time, using the drift detection neural network model. Thus, indicating that the current temporal activities in the real-time feed do not match the contextual baseline of the insight KB 110.

The processing unit 202 is configured for selecting the visual frames corresponding to the plurality of timestamps from the real-time feed upon detecting the contextual drift. The visual frames include one or more visual frames selected for the timestamps corresponding to at least one of, prior to the contextual drift, during the contextual drift, and post the contextual drift. Further, the processing unit 202 is also configured for creating the pre-drift stream based on the real-time feed. The pre-drift stream indicates a scene prior to detecting the contextual drift using a forgetfulness probability density function (PDF) and a selective PDF. Further, the processing unit 202 is also configured for creating the drift stream based on the real-time feed in response to detecting contextual drift. The drift stream indicates a scene during the contextual drift. Further, the processing unit 202 is also configured for storing the pre-drift stream and the drift stream in a single circular buffer. Further, the processing unit 202 is also configured for creating the post-drift stream based on the real-time feed, using a scene significance probability density function (PDF) and the selective PDF. The post-drift stream indicates the scene after the contextual drift has ended. Consequently, the processing unit 202 is configured for selecting the visual frames among the pre-drift stream, the drift stream, and the post-drift stream.

The processing unit 202 is configured for transmitting in real-time the visual frames selected for the timestamps corresponding to at least one of, the pre-drift, drift, and post-drift streams using the single circular buffer, for remote monitoring at the site 104. Further, the processing unit 202 is also configured for assigning an adaptive frame rate to the visual frames corresponding to at least one of, the pre-drift stream and the post-drift stream based on an adaptive configuration associated with the site 104. Further, the processing unit 202 is also configured for adjusting a variance in the frame rate. The frame rate is adjusted based on a configurable drop rate and a configurable sampling rate. The configurable drop rate and the configurable sampling rate indicate arbitrary functions corresponding to the site 104, thereby influencing the variance in frame capture based on site-dependent properties to balance resource usage and monitoring accuracy. Consequently, the processing unit 202 is configured for transmitting a selected frame indicating a last frame among the visual frames from the single circular buffer based on the variance.

The processing unit 202 is configured for ceasing the transmission of the selected visual frames in response to determining a termination of the contextual drift and subsequent to a predefined time-period corresponding to the visual frames from the real-time feed or the post-drift stream.

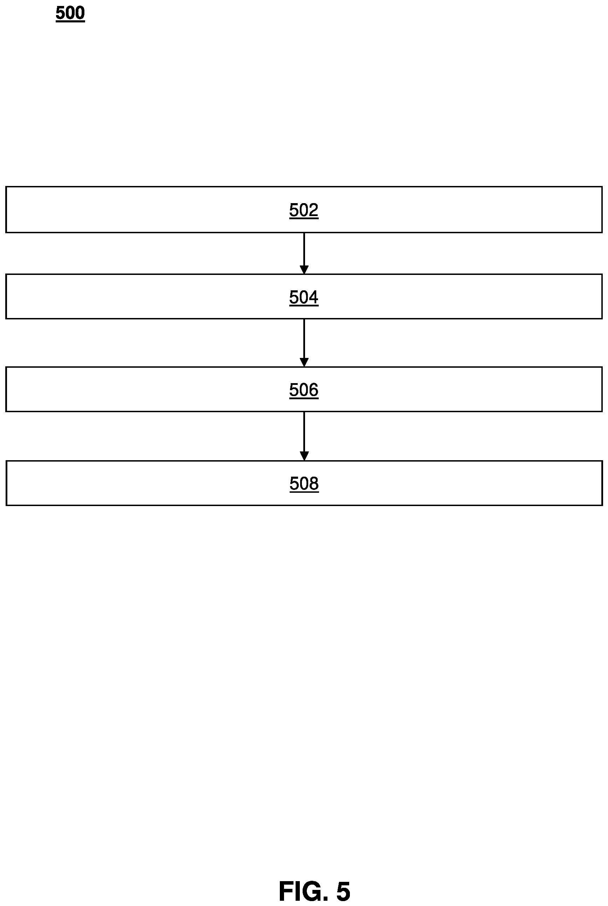

In an embodiment, the present invention also contemplates a computer-program product, having machine-readable instructions stored therein, when executed by the one or more processors, cause the one or more processors to perform a method for monitoring the site 104. The details on the method(s) performed by the one or more processors have been elaborated in subsequent paragraphs at least with reference to FIG. 5.

Further, the present invention also contemplates a non-transitory computer-readable medium encoded with executable instructions. The executable instructions, when executed by the one or more processors, cause the one or more processors to perform a method for monitoring the site 104. The details on the method(s) performed by the one or more processors have been elaborated in subsequent paragraphs at least with reference to FIG. 5.

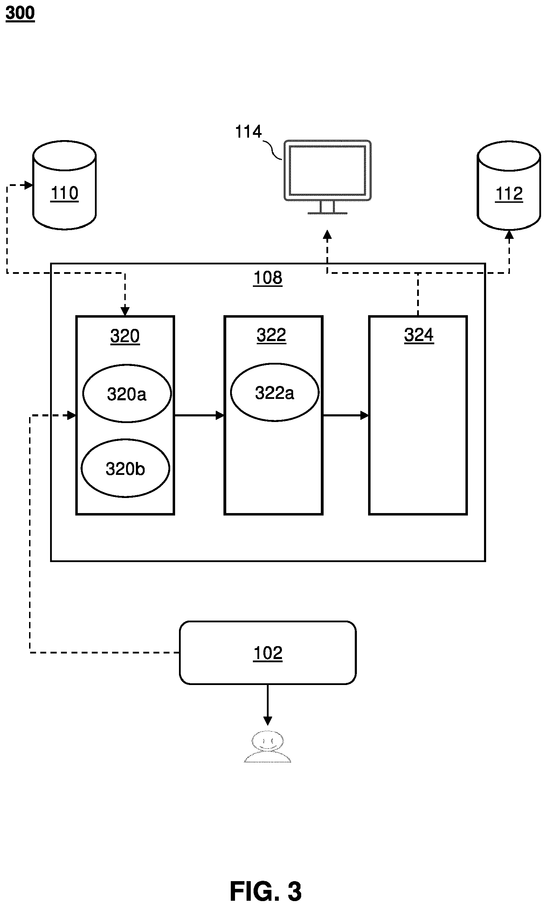

FIG 3 illustrates a functional block diagram of the system 300 for remote monitoring of the site 104, in accordance with an embodiment of the present invention.

The functional blocks 300 of the system 100 are implemented as the remote monitoring and surveillance system. The functional blocks 300 includes an insight generation module 320, a drift detection module 322, and a transmission module 324. The insight generation module 320, the drift detection module 322, and the transmission module 324 are in communication with each other. Further, the insight generation module 320, the drift detection module 322, and the transmission module 324 reside in the edge device 108, receiving the visual input from the one or more visual capturing devices 102. In an example, the one or more visual capturing devices 102 may be installed at the site 104 and adapted to capture the scene at the site 104 for the remote monitoring and surveillance system.

In an embodiment, the insight generation module 320 is adapted for generating the insight KB 110 by identifying the space 106a and the one or more objects 106b at the site 104. In an example, the insight generation module 320 is adapted for determining positions of the one or more objects 106b and understanding the temporal context of activities involving the one or more objects 106b. In the embodiment, the insight generation module 320 includes the segmentation AI model 320a and the temporal context AI model 320b.

The segmentation AI model 320a is adapted to identify and locate the space 106a and the one or more objects 106b within the visual inputs received from the one or more visual capturing devices 102. The segmentation AI model 320a is adapted to perform the object identification and position determination based on the spatial coordinates of the space 106a and the one or more objects 106b. The segmentation AI model 320a analyzes the visual inputs to detect and classify the space 106a and the one or more objects 106b present at the site 104. The segmentation AI model 320a may use image processing and machine learning techniques to distinguish between different types of objects, for instance, machinery, tools, and personnel.

In an example scenario, in a manufacturing plant, the segmentation AI model 320a may identify various objects such as assembly line robots, conveyor belts, raw materials, finished products, and workers (humans). For instance, the segmentation AI model 320a may detect a specific type of machine used for welding and classify the machine accordingly. Further, once the space 106a and the one or more objects 106b are identified, the segmentation AI model 320a may determine positions associated with the space 106a and the one or more objects 106b within the site by computing spatial coordinates. The computation of spatial coordinates may include correlating or mapping the identified objects to a defined spatial framework, enabling precise localization of each object within the site 104.

In the example scenario, the segmentation AI model 320a may determine that a welding machine is located at coordinates x1, y1, a conveyor belt at coordinates x2, y2, and a worker at coordinates x3, y3. Advantageously, the spatial mapping is crucial for understanding the layout and movement within the site 104.

Thus, the segmentation AI model 320a creates a detailed map of the space 106a and the one or more objects 106b at the site 104, thereby providing foundational data for further analysis.

The temporal context AI model 320b focuses on understanding the activities and interactions involving the identified objects over time. The temporal context AI model 320b monitors and analyzes the temporal aspects of site operations to generate insights into routine activities. The temporal context AI model 320b continuously monitors the activities of individual users and their interactions with the identified objects 106b. Further, the temporal context AI model 320b tracks the sequence, duration, and frequency of various actions to build a temporal profile of site operations.

In an example scenario, in the manufacturing plant, the temporal context AI model 320b may observe that a worker interacts with the welding machine every morning for setup, uses it intermittently throughout the day, and performs maintenance checks every evening. The temporal context AI model 320b may also track the movement patterns of workers, such as their routes between different machines and workstations.

Further, the temporal context AI model 320b correlates the monitored activities with the identified objects to create a comprehensive picture of routine operations. This involves associating specific actions and interactions with the spatially located objects 106b to understand the usage and operational patterns of the objects 106b or the space 106a.

In an example scenario, the temporal context AI model 320b may correlate that the welding machine at coordinates x1, y1 is primarily used by a particular worker "A" during specific times of the day. In the example scenario, the temporal context AI model 320b may also identify periods of inactivity or unusual usage patterns, such as extended downtime or unexpected maintenance activities.

Advantageously, the temporal context AI model 320b provides a dynamic understanding of site operations by capturing the temporal dimension of the activities. Thereby enabling the detection of deviations from routine activities and helping to identify potential issues or anomalies in the site 104.

In the embodiment, the insight generation module 320 is adapted for combining the outputs of the segmentation AI model 320a and the temporal context AI model 322b, for generating the insight KB 110. The KB 110 serves as the repository of routine activities performed at the site 104, incorporating both spatial and temporal information.

In an example scenario, the insight KB 110 may include knowledge such as:
"Welding machine located at coordinates x1, y1: Operated by Worker "A" from 9 AM to 5 PM, followed by maintenance checks at 6 PM."
"Conveyor belt at coordinates x2, y2: Active during production hours, inactive during breaks and maintenance periods."

In an embodiment, the drift detection module 322 is adapted for monitoring and identifying drifts or deviations from normal activities at the site 104. The drift detection neural network 322a is an AI model adapted for detecting deviations, or the "contextual drifts" from the normal activities at the monitored site 104. The drift detection neural network 322a is adapted for maintaining situational awareness and ensuring that any anomalies or unusual events (drifts) are quickly identified and addressed. The drift detection neural network 322a is adapted to continuously monitor the real-time feed from the one or more visual capturing devices 102 installed at the site 104. The drift detection neural network 322a compares the current activities captured in the real-time feed with the predefined contextual baseline stored in the insight KB 110.

In an example scenario, in a shipping warehouse, the cameras (the one or more visual capturing devices 102) may monitor various sections like storage racks, loading docks, and entry points. The real-time feed from the cameras is continuously analyzed by the drift detection neural network 322a. The contextual baseline may include activities such as workers loading goods onto wagons between 9 AM and 5 PM, periodic inspections, and specific machinery operating during designated hours.

In an embodiment, the drift detection module 322 is adapted for computing the Euclidean distance value to quantify the difference between current activities and the contextual baseline. The Euclidean distance value is a mathematical measure used to determine the similarity or dissimilarity between two sets of data points. In the embodiment, the Euclidean distance value is calculated between the vector of current temporal activities and the vector representing the baseline activities.

In an example scenario, in the shipping warehouse, the baseline may indicate that workers typically follow a certain path on the loading docks while transporting goods. If the current activity shows a worker deviating significantly from this path, the Euclidean distance will be higher, indicating a potential anomaly at the shipping warehouse (site 104).

In an embodiment, the drift detection module 322 is adapted to consider a predefined threshold to finally determine the deviation or the drift. If the Euclidean distance value exceeds the predefined threshold for more than a predefined dwell time, the scenario may be indicated as the contextual drift.

In an embodiment, the predefined dwell time refers to the duration for which the drifts or deviation persists. If the drift is detected but lasts only for a short period i.e., less than the predefined dwell time, it may be considered noise rather than a significant drift.

In an example scenario, if the predefined threshold is set to "2.0" and the Euclidean distance between the current and baseline activities exceeds the predefined threshold ("2") for more than 10 minutes (i.e., the predefined dwell time), thus indicating detection of the contextual drift that requires attention.

In another example scenario, in the shipping warehouse, if the drift detection module 322 detects that a worker is repeatedly accessing restricted areas such that the worker deviates from their normal path, for more than 10 minutes (i.e., the predefined dwell time), the drift detection module 322 detects the behavior as the contextual drift.

In an embodiment, the transmission module 324 is adapted for selecting the visual frames among the pre-drift stream, the drift stream, and the post-drift stream for transmitting to the remote database 112 and the remote device 114 for remote monitoring and surveillance.

In an embodiment, the transmission module 324 is adapted for handling the visual frames to detect and analyze drifts, referred to as the "contextual drifts". The method involves creating three types of streams: pre-drift, drift, and post-drift, which are managed using probability density functions (PDFs) and stored in the single circular buffer.

In an embodiment, cameras (i.e., the one or more visual capturing devices 102) continuously capture video streams or video inputs from different sections of the site 104. The transmission module 324 is adapted to utilize the forgetfulness probability density function (PDF) such that the visual frames from the real-time feed are analyzed, and older visual frames are more likely to be forgotten. For instance, frames from an hour ago are less relevant than the recent ones. Further, the transmission module 324 is adapted to utilize selective PDF such that the visual frames that are similar to each other are selectively remembered or forgotten to create gaps, focusing on unique events. For instance, if a worker walks through the same path repeatedly, only a few key frames corresponding to the visual frame of walking are retained.

In an embodiment, the transmission module 324 is adapted to collect and store the visual frames during the detected drift period. For instance, each of the visual frames showing the worker's unauthorized entry and actions in the restricted area may be stored. Furthermore, the visual frames constituting the drift stream are stored in a separate part of the single circular buffer.

In an embodiment, the transmission module 324 is adapted to creating the post-drift stream based on the real-time feed. The transmission module 324 is adapted to utilize a scene significance PDF for capturing the visual frames after the drift stream is analyzed for their significance. Thus, the post-drift stream constitutes the visual frames showing the aftermath of the worker's actions.

In an embodiment, the transmission module 324 is adapted to transmit the less significant visual frames such as those showing normal activities resuming, less frequently over time.

In an advantageous aspect, the transmission module 324 based on the forgetfulness PDF and selective PDF functions, selectively remembers and forgets the visual frames, thus, efficiently managing large volumes of data. Therefore, the creation of the pre-drift stream, the drift stream and the post-drift stream provide a detailed view of incidents at the site 104, including the context before and after the drift, which is crucial for understanding and addressing anomalies. Further, in an advantageous aspect, the single circular buffer and selective transmission processes optimize memory and bandwidth usage of the remote monitoring and surveillance system, thus, ensuring handling of the continuous monitoring without overwhelming the resources.

In an embodiment, the transmission module 324 is adapted for transmitting in real-time the visual frames selected for the timestamps corresponding to at least one of, the pre-drift stream, the drift stream, and the post-drift stream using the single circular buffer, for remote monitoring at the site 104. The single circular buffer stores the pre-drift stream, the drift stream, and the post-drift stream (visual frames). When the anomaly is detected, the transmission module 324 is adapted for transmitting frames from the pre-drift period, ensuring the context before the drift is available for remote monitoring.

In an advantageous aspect, the single circular buffer manages the visual frames stored i.e., the pre-drift stream, the drift stream, and the post-drift stream and organizes them for transmission. The single circular buffer continuously overwrites the oldest frames with new ones, ensuring that the buffer size remains manageable and that only the most recent and relevant data is available for immediate access.

In an embodiment, the transmission module 324 is adapted to balance resource usage and monitoring accuracy. The transmission module 324 is adapted to utilise an adaptive frame rate for the transmission of the visual frames corresponding to pre-drift and post-drift streams. The adaptive configuration is tailored to the specific requirements of the site 104 being monitored. For instance, in areas with less frequent activity, the adaptive frame rate may be reduced to conserve bandwidth and storage, whereas areas with high activity may have a higher adaptive frame rate to capture more detailed data.

Further, in an embodiment, the transmission module 324 is adapted to generate a variance by adjusting the adaptive frame rate based on configurable drop rates and configurable sampling rates. The configurable drop rates and sampling rates are set to either deterministic or non-deterministic values, depending on the specific needs of the site. In an example, the configurable drop rate determines the frequency for discarding the visual frames, while the configurable sampling rate controls the frequency at which frames are captured. The transmission module 324 based on varying the configurable drop rates and the configurable sampling rates, optimizes the frame capture process, ensuring that significant events are captured in detail while routine or less critical periods are recorded with fewer frames.

Furthermore, in an embodiment, the transmission module 324 is adapted to detect the end of the drift, including analyzing the visual frames and determining if the situation on the site 104 has returned to normal, thereby indicating that the drift period is over.

Furthermore, in an embodiment, the transmission module 324 is adapted to continue to transmit visual frames for a configurable period, once the end of the drift is detected. This post-drift transmission ensures that any aftermath of the drift or anomaly is captured and available for analysis. For instance, the visual frames may be captured for a few minutes even after the drift ends to document any actions taken in response to the detected anomaly.

Furthermore, in an embodiment, the transmission module 324 is adapted to stop transmitting the visual frames related to the drift after a predefined post-drift period. In an advantageous aspect, ceasing the transmission of the visual frames conserves resources, as it ensures that transmission occurs only when necessary, thus reducing the burden on bandwidth and storage of the remote monitoring and surveillance system.

In an example scenario for monitoring a factory floor with various machines and operators involved in routine manufacturing processes. The factory management may deploy an advanced monitoring system using the edge device 108 and the one or more visual capturing devices 102 to ensure smooth operations, detect anomalies, and respond promptly to any unusual events.

The edge device 108 may generate the insight knowledge base 110 by analyzing recurring visual inputs from the cameras. This insight knowledge base 110 may include a contextual baseline of routine activities, such as machine operations, worker movements, and material handling. The cameras continuously capture real-time video feeds of the factory floor. Further, the edge device 108 may use the segmentation AI model 320a to identify objects e.g., machines, workers and their positions within the factory floor. The temporal context AI model 320b tracks activities over time, correlating object movements and interactions to form a repository of routine activities.

In the example scenario, the system 100 may apply the forgetfulness PDF and the selective PDF to manage the visual frames captured before any anomaly and stored in the pre-drift stream.

In the example scenario, the system 100 detects an unusual event, for instance, a machine starts malfunctioning, causing a deviation from the normal operational pattern. The drift detection neural network model 322a compares the real-time feed with the contextual baseline and computes the Euclidean distance value to quantify the drift. Once the Euclidean distance value exceeds the predefined threshold for the predefined dwell time, the system 100 may confirm the detection of the contextual drift.

In the example scenario, the system 100 thus captures the visual frames during the drift or the anomaly, stores in the drift stream within the single circular buffer. Thus, the drift stream documents the malfunction of the machine, capturing every detail as it unfolds.

In the example scenario, the system 100 may continue to capture the visual frames, even after the machine malfunction is resolved thus, creating the post-drift stream. The scene significance PDF and the selective PDF are applied to the post-drift stream, ensuring that important visual frames are selected and retained while less critical ones are discarded.

In the example scenario, the system 100 may assign an adaptive frame rate to the pre-drift stream and post-drift stream based on the factory floor's specific requirements. For instance, during routine operations, the adaptive frame rate may be lower to conserve resources. During and after the drift, the adaptive frame rate is increased to capture more details.

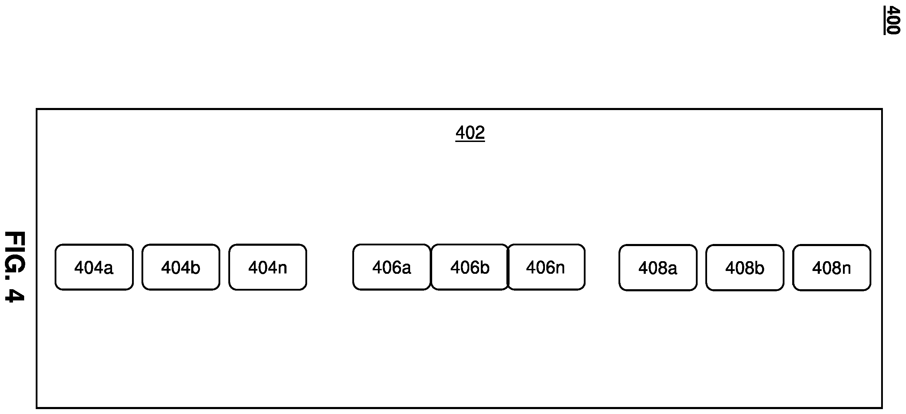

In the example scenario, the edge device 108 may begin transmitting the visual frames from the pre-drift stream, the drift stream, and the post-drift stream in real-time to a centralized server for remote monitoring. FIG 4 illustrates a representation 400 for transmission of the visual frames for remote monitoring of the site 104, in accordance with an embodiment of the present invention. The visual frames 402 include the pre-drift stream 404a, 404b,...404n. The visual frames 402 include the continuous drift stream 406a, 406b,...406n. The visual frames 402 include the post-drift stream 408a, 408b,...408n. Thus, the transmission allows the factory managers and remote monitoring personnel to view the event as it happens and take necessary actions thereby fulfilling the objective of remote monitoring and anomaly detection at the site 104.

In the example scenario, the system 100 may adjust the variance in the frame rate based on the configurable drop rates and the configurable sampling rates thus, ensuring efficient use of bandwidth and storage without compromising on monitoring accuracy. For instance, if the malfunction of the machine persists, the frame rate remains high to capture detailed data. However, once the malfunction is resolved, the frame rate decreases to normal levels.

In the example scenario, the system 100 may cease transmission after the predefined post-drift period. Thus, conserving resources and ensuring that only relevant data is transmitted.

In the example scenario, thereby the factory managers may review the transmitted visual frames to understand the cause of the machine malfunction based on analyzing the pre-drift stream, the drift stream, and the post-drift stream to identify any patterns or triggers that led to the anomaly at the factory floor.

In the example scenario, further based on the analysis, the factory managers may implement preventive measures to avoid similar malfunctions in the future. Thus, the implementation of the preventive measures is captured by the camera and thus, the edge device 108 may update the insight KB 110. Therefore, enhancing the remote monitoring and surveillance system's ability to detect and respond to future drifts.

Additionally, upon reoccurrence of the same drifts periodically, the edge device 108 may update the insight KB 110 with the drift as a new normal. Thus, the remote monitoring and surveillance system recognizes such drift as a routine activity over time. Thus, advantageously, the remote monitoring and surveillance system adapts to changes and ensure that these repeated activities (drifts) no longer trigger false alarms, thereby enhancing the accuracy and efficiency.

In an example scenario, in the shipping dockyard the workers may be using a designated path to transport materials. The shipping dockyard introduces a new workflow involving workers to start using an alternate path due to renovations. Initially, the system 100 identifies the anomaly since it deviates from the routine activities stored in the insight KB 110. However, as the new path is used consistently over a period of time, the system 100 detects the repeated occurrence of the drift. Thereafter, the system 100 may update the insight KB 110 to include the new path as part of the normal routine. Consequently, the system 100 may not trigger or detect any false positives for drift detection while the workers use the alternate path, thus, recognizing it as a new normal. Therefore, advantageously, the remote monitoring and surveillance system maintains an accurate representation of routine activities but also dynamically adjusts to changes in the site, reducing false positives and improving overall surveillance performance.

FIG 5 illustrates a flow chart of a method 500 for remote monitoring of the site 104, in accordance with an embodiment of the present invention. The method 500 includes a series of operation steps 502 through 508 performed by the processing unit 202 of the system 100.

At step 502, the processing unit 202 generates the insight KB 110 based on at least one recurring visual input received from the one or more visual capturing devices 102 installed at the site 104. The insight KB 110 indicates a stored repository of the contextual baseline of the site 104.

Further, the processing unit 202 identifies the space 106a and the one or more objects 106b located at the site 104 based on the visual input received from the one or more visual capturing devices 102 using the segmentation artificial intelligence (AI) model 320a.

Further, the processing unit 202 determines the position of the space 106a and each of the identified one or more objects 106b within the site 104 based on the spatial coordinates using the segmentation AI model 320a. The processing unit 202 determines the temporal context based on monitoring activities of one or more individual users corresponding to the identified space 106a and the one or more objects 106b within the site 104 using the temporal context AI model.

Consequently, the processing unit 202 generates the insight KB 110 based on correlating the temporal context and the identified space 106a and the one or more objects 106b such that the insight KB 110 comprises the repository of the routine activities performed at the site 104.

Further, the processing unit 202 receives the real-time visual input from the one or more visual capturing devices 102 and identifies the activity different from the routine activities based on monitoring activities of one or more individual users in the real-time visual input. The processing unit 202 updates the insight KB 110 with the identified activity different from the routine activity.

At step 504, the processing unit 202 detects the contextual drift at the site based on comparing the real-time feed received from the one or more visual capturing devices 102 and the insight KB 110 using the drift detection neural network model 322a. In an embodiment, the contextual drift indicates the deviation in the contextual baseline associated with the scene of the site.

In an embodiment, the processing unit 202 monitors the real-time feed from the one or more visual capturing devices 102. Furthermore, the processing unit 202 computes the Euclidean distance value between current temporal activities performed in the real-time feed and the contextual baseline of the insight KB 110 using the drift detection neural network model 322a. Furthermore, the processing unit 202 detects the contextual drift at the site in response to determining that the Euclidean distance value exceeds the predefined threshold, for more than the predefined dwell time. Thereby indicating that the current temporal activities in the real-time feed do not match the contextual baseline of the insight KB 110.

At step 506, the processing unit 202 selects the visual frames corresponding to the plurality of timestamps from the real-time feed in response to detecting the contextual drift. In an embodiment, the visual frames comprise one or more visual frames selected for the timestamps corresponding to at least one of, prior to the contextual drift, during the contextual drift, and post the contextual drift.

In an embodiment, the processing unit 202 creates the pre-drift stream based on the real-time feed. The pre-drift stream indicates the scene before detecting the contextual drift using the forgetfulness PDF and the selective PDF.

In an embodiment, the processing unit 202 creates the drift stream based on the real-time feed in response to detecting the contextual drift. The drift stream indicates the scene during the contextual drift.

In an embodiment, the processing unit 202 stores the pre-drift stream and the drift stream in the single circular buffer.

In an embodiment, the processing unit 202 creates the post-drift stream based on the real-time feed, using the scene significance PDF and the selective PDF. The post-drift stream indicates the scene after the contextual drift has ended. Consequently, the processing unit 202 selects the visual frames among the pre-drift stream, the drift stream, and the post-drift stream.

At step 508, the processing unit 202 transmits the visual frames for remote monitoring and anomaly detection at the site 104.

In an embodiment, the processing unit 202 transmits the visual frames selected for the timestamps corresponding to at least one of, the pre-drift, drift, and post-drift streams using the single circular buffer, for remote monitoring at the site 104 in real-time.

In an embodiment, the processing unit 202 assigns the adaptive frame rate to the visual frames of the pre-drift stream and the post-drift stream based on the adaptive configuration associated with the site 104.

In an embodiment, the processing unit 202 adjusts the variance in the frame rate based on the configurable drop rate and the configurable sampling rate. The configurable drop rate and the configurable sampling rate indicate arbitrary functions corresponding to the site 104 thereby influencing the variance in frame capture based on site-dependent properties to balance resource usage and monitoring accuracy. Consequently, the processing unit 202 transmits the selected frame indicating the last frame among the visual frames from the single circular buffer based on the variance.

In an embodiment, the processing unit 202 ceases the transmission of the selected visual frames of the drift streams in response to determining the termination of the contextual drift. The processing unit 202 ceases the transmission of the selected visual frames subsequent to the predefined time period corresponding to the visual frames from the real-time feed or the post-drift stream.

In an advantageous aspect, the method 500 provides comprehensive monitoring based on creating the insight KB 110. Thus, the method 500 maintains the detailed repository of routine activities of the site 104, allowing for accurate baseline establishment.

In an advantageous aspect of the method 500, the segmentation AI model 320a and the temporal context AI model 322b provide a thorough understanding of the site's 104 operational environment.

In an advantageous aspect, the method 500 provides ability to monitor the real-time feeds and detect the contextual drifts thus ensuring prompt identification of the drifts or anomalies at the site 104.

In an advantageous aspect, the method 500 provides the Euclidean distance value to measure deviations thus, providing a quantifiable method to detect significant changes from the routine activities.

In an advantageous aspect, the method 500 provides the forgetfulness PDF and the selective PDFs for efficient data retention, storing only the most relevant pre-drift frames.

In an advantageous aspect, the method 500 provides adjusting frame rates based on site-specific configurations thus, optimizing resource usage, ensuring that critical events are captured in detail while conserving bandwidth and storage during routine operations.

In an advantageous aspect, the method 500 provides transmission of the visual frames in real-time thus, ensuring that remote monitoring personnel can promptly respond to anomalies.

In an advantageous aspect, the method 500 provides detailed post-drift streams thus, enabling a comprehensive analysis of events leading to and following the detected drift, aiding in preventive measures and process improvements.

In an advantageous aspect, the method 500 stores the pre-drift stream and the drift stream in the single circular buffer thus, reducing memory overhead.

In an advantageous aspect, the method 500 provides adjusting the variance in frame rates based on the configurable drop rates and the configurable sampling rates thus, ensuring efficient use of computational and storage resources.

In an advantageous aspect, the method 500 provides using the predefined thresholds for Euclidean distance and the predefined dwell time thus, ensuring that only significant deviations trigger alerts. Therefore, the method 500 reduces false positives.

In an advantageous aspect, the method 500 provides including the predefine dwell time in the detection criteria thus, ensuring that transient or minor drifts or deviations do not cause unnecessary alerts.

The various actions, acts, blocks, steps, or the like in the flow diagrams may be performed in the order presented, in a different order, or simultaneously. Further, in some embodiments, some of the actions, acts, blocks, steps, or the like may be omitted, added, modified, skipped, or the like without departing from the scope of the invention.

Unless otherwise defined, all technical and scientific terms used herein have the same meaning as commonly understood by one ordinary skilled in the art to which this invention belongs. The system, methods, and examples provided herein are illustrative only and not intended to be limiting.

While specific language has been used to describe the present subject matter, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practised with modification within the scope of the embodiments as described herein.

### List of Reference Numerals

| SYSTEM | 100 |
|---|---|
| SITE | 104 |
| VISUAL CAPTURING DEVICES | 102 |
| SPACE | 106a |
| ONE OR MORE OBJECTS | 106b |
| EDGE DEVICE | 108 |
| INSIGHT KNOWLEDGE BASE | 110 |
| REMOTE DATABASE | 112 |
| REMOTE DEVICE | 114 |
| BUS | 201 |
| PROCESSING UNIT | 202 |
| MEMORY UNIT | 204 |
| COMMUNICATION UNIT | 206 |
| I/O INTERFACE | 208 |
| INSIGHT GENERATION MODULE | 320 |
| DRIFT DETECTION MODULE | 322 |
| TRANSMISSION MODULE | 324 |
| SEGMENTATION AI MODEL | 320a |
| TEMPORAL CONTEXT AI MODEL | 320b |
| DETECTION NEURAL NETWORK | 322a |
| VISUAL FRAMES | 402 |
| PRE-DRIFT STREAM | 404a, 404b,...404n |
| POST-DRIFT STREAM | 408a, 408b,...408n |
| METHOD | 500 |

## Claims

1. A computer-implemented method for monitoring of a site, the method comprising:
generating, by one or more processors, an knowledge base based on at least one recurring visual input received from one or more visual capturing devices installed at the site, wherein the knowledge base indicates a stored repository of a contextual baseline of the visual input received from the site;
detecting, by the one or more processors, a contextual drift at the site based on comparing a real-time feed received from the one or more visual capturing devices and the knowledge base using a drift detection neural network model, wherein the contextual drift indicates a deviation in the contextual baseline associated with the visual input of the site;
selecting, by the one or more processors, visual frames corresponding to a plurality of timestamps from the real-time visual input in response to detecting the contextual drift, wherein the visual frames comprise one or more visual input selected for the timestamps corresponding to at least one of, prior to the contextual drift, during the contextual drift, and post the contextual drift; and
transmitting, by the one or more processors, the visual frames for monitoring and anomaly detection at the site.

2. The method according to claim 1, wherein the contextual baseline comprises of a baseline environment and baseline activities on the site.

3. The method according to any of the preceding claims, wherein generating the knowledge base comprises:
identifying one or more objects located at the site based on the visual input received from the one or more visual capturing devices using a segmentation artificial intelligence (Al) model;
determining a position of each of the identified one or more objects within the site based on spatial coordinates using the segmentation AI model;
determining a temporal context based on monitoring activities of one or more individual users corresponding to the identified one or more objects within the site using a temporal context AI model; and
generating the knowledge base based on correlating the temporal context and the identified one or more objects such that the knowledge base comprises a repository of routine activities performed at the site.

4. The method according to any of the preceding claims, wherein generating the knowledge base comprises:
receiving the real-time visual input from the one or more visual capturing devices; and
identifying an activity different from the routine activities based on monitoring activities of one or more individual users in the real-time visual input.

5. The method according to any of the preceding claims, further comprising:
modifying the knowledge base based on identification of the activity different from the routine activities such that the contextual baseline is updated with the activity.

6. The method according to any of the preceding claims, wherein detecting the contextual drift at the site comprises:
monitoring the real-time visual input from the one or more visual capturing devices;
computing a Euclidean distance value between current temporal activities performed in the real-time feed and the contextual baseline of the knowledge base using the drift detection neural network model; and
detecting the contextual drift at the site in response to determining that the Euclidean distance value exceeds a predefined threshold, for more than a predefined dwell time, using the drift detection neural network model, thereby indicating that the current temporal activities in the real-time visual input do not match the contextual baseline of the knowledge base.

7. The method according to any of the preceding claims, wherein selecting the visual frames comprises:
creating a pre-drift stream based on the real-time visual input, the pre-drift stream indicating the visual input prior to detecting the contextual drift using a forgetfulness probability density function (PDF) and a selective PDF;
creating a drift stream based on the real-time visual input in response to detecting contextual drift, wherein the drift stream indicates the visual input during the contextual drift;
storing the pre-drift stream and the drift stream in a single circular buffer;
creating a post-drift stream based on the real-time visual input, using a scene significance probability density function (PDF) and the selective PDF, wherein the post-drift stream indicates the visual input after the contextual drift has ended; and
selecting the visual frames among the pre-drift stream, the drift stream, and the post-drift stream.

8. The method according to any of the preceding claims further comprising:
transmitting in real-time the visual frames selected for the timestamps corresponding to at least one of, the pre-drift, drift, and post-drift streams using the single circular buffer, for monitoring at the site.

9. The method according to any of the preceding claims, wherein:
assigning an adaptive frame rate to the visual frames corresponding to at least one of, the pre-drift stream and the post-drift stream based on an adaptive configuration associated with the site;
adjusting a variance in the frame rate based on at least one of, a configurable drop rate and a configurable sampling rate, wherein either the configurable drop rate and the configurable sampling rate indicates arbitrary functions corresponding to the site, thereby influencing the variance in frame capture based on site dependent properties to balance resource usage and monitoring accuracy; and
transmitting a selected frame indicating a last frame among the visual frames from the single circular buffer based on the variance.

10. The method according to claim 8 further comprising:
ceasing the transmission of the selected visual frames corresponding to at least one of the drift streams in response to determining termination of the contextual drift and subsequent to a predefined time period corresponding to the visual frames from the real-time feed or the post-drift stream.

11. An apparatus for monitoring of a site, the apparatus comprising:
a memory; and
one or more processors communicatively coupled to the memory, wherein the memory comprises programmable instructions which, when executed by the one or more processors, cause the one or more processors to perform the steps of claims 1 to 10.

12. A system for monitoring of a site, the system comprising:
one or more visual capturing devices installed at the site, wherein the one or more visual capturing devices configured to capture a recurring visual input of the site to generate an knowledge base indicating a stored repository of a contextual baseline of the visual input from the site; and
one or more AI models communicatively coupled to the one or more visual capturing devices and an apparatus according to claim 11, wherein the apparatus is configured for monitoring of a site according to any of the preceding claims 1 to 10.

13. A computer-program product having machine-readable instructions stored therein, which when executed by one or more processors, cause the one or more processors to perform a method according to any of the claims 1 to 10.

14. A non-transitory computer readable medium encoded with executable instructions which, when executed by one or more processors, causes the one or more processors to perform a method according to any one of the claims 1 to 10.
